# FASCICULE DE BREVET EUROPEEN

(11) **EP 0 776 583 B1**
(45) Date de publication et mention de la délivrance du brevet: **24.03.1999**
(21) Numéro de dépôt: 95920124.5
(22) Date de dépôt: 05.05.1995
(51) Int. Cl.: H04Q 7/22, H04Q 7/30

(54) **PROCEDE D'ACCES PAQUET DANS UN SYSTEME DE RADIOCOMMUNICATION NUMERIQUE CELLULAIRE**
PAKETZUGRIFFSVERFAHREN IN EINEM DIGITALEN ZELLULAREN FUNKKOMMUNIKATIONSSYSTEM
METHOD OF ACCESSING A PACKET IN A CELLULAR DIGITAL RADIO SYSTEM

(30) Priorité: 10.05.1994 FR 9405747
(43) Date de publication de la demande: 04.06.1997
(73) Titulaire: ALCATEL, 75008 Paris (FR)
(72) Inventeur: DE SEZE, Fabrice, F-75017 Paris (FR)
(74) Mandataire: El Manouni, Josiane
(86) Numéro de dépôt international: FR9500592
(87) Numéro de publication internationale: WO9531077

(56) Documents cités:
- EP-A- 0 407 367
- MOBILE RADIO CONFERENCE, 15 Novembre 1991 VALBONNE, FR, pages 193-200, XP 000444228 NÜSSLER 'The Public Packet Mode Mobile Data Service of the Deutsche Bundespost Telekom'
- ELECTRONICS AND COMMUNICATION ENGINEERING JOURNAL, vol. 3, no. 3, Juin 1991 LONDON GB, pages 137-143, XP 000235796 DAVIE ET AL 'A Cellular Packet Radio Data Network'

## Description

Le domaine de l'invention est celui des radiocommunications de données. L'invention s'applique notamment aux systèmes de radiocommunication numériques cellulaires avec des mobiles, tels que ceux conçus selon le standard de radiotélécommunication public GSM (Groupe Spécial Mobile).

D'une façon générale, un système de radiocommunication numérique cellulaire est mis en oeuvre au sein d'un réseau de cellules géographiques parcouru par des stations mobiles. Une station de base est associée à chaque cellule, et une station mobile communique par l'intermédiaire de la station de base associée à la cellule dans laquelle elle se trouve.

Dans ce type de système, les communications en mode établi (stable) sont acheminées sur des canaux de trafic (TCH, pour Traffic CHannel) dans les deux sens de transmission, à savoir dans le sens station mobile vers station de base (sens montant) et dans le sens station de base vers station mobile (sens descendant).

De plus, ce type de système met en oeuvre un multiplexage temporel, selon la technique dite AMRT (Accès Multiple à Répartition dans le Temps).

De façon connue, la technique AMRT consiste à diviser le temps en trames de durée fixe et prédéterminée, elles-mêmes divisées en intervalles de temps. Ainsi, les signaux véhiculés par le système sont organisés en trames, et chaque intervalle de temps d'une trame correspond à un canal de trafic sur lequel peut être acheminé dans un sens une communication en mode établi (voir par exemple le document EP-A-0 407 367).

A l'émission, dans chaque trame du sens montant, une station mobile transmet des données uniquement pendant l'intervalle de temps qui lui est alloué. Dans chaque trame du sens descendant, la station de base transmet des données dans chacun des intervalles de temps, de façon à communiquer simultanément avec une pluralité de stations mobiles, associées chacune à un des intervalles de temps.

A la réception, chaque station mobile sait extraire de chaque trame du sens descendant l'intervalle de temps qui lui est destiné. De même, la station de base sait à quelle station mobile est associé chacun des intervalles de temps des trames qu'elle reçoit.

Dans les systèmes classiques, du type décrit ci-dessus, un intervalle de temps est alloué à une station mobile pour toute la durée d'une communication. On parle alors de mode circuit.

Un tel mode circuit présente un inconvénient majeur, à savoir la sous-utilisation des ressources de transmission. En effet, pendant une communication entre une station mobile et une station de base, ces deux entités ne transmettent pas des données en permanence. En d'autres termes, il existe des intervalles de temps pendant lesquels aucune donnée n'est transmise.

Une solution connue pour remédier à cet inconvénient consiste à utiliser en mode paquet au moins un des intervalles de temps de chaque trame. En mode paquet, un intervalle de temps (c'est-à-dire un canal de trafic) du sens montant est partagé entre plusieurs stations mobiles. Ainsi, une station mobile qui désire partager avec d'autres un canal de trafic envoie une demande d'allocation sur un canal d'accès (canal RACH (Random Access CHannel) dans le système GSM). Toutes les stations mobiles auxquelles le système répond favorablement à une telle demande d'allocation sont associées à un canal de trafic partagé et disposent chacune d'un circuit virtuel (par opposition au circuit réel dont dispose une station mobile à laquelle un intervalle de temps a été alloué sans partage pour toute la durée d'une communication).

Pour déterminer quelle station mobile, parmi l'ensemble des stations mobiles associées à un même canal de trafic partagé, peut effectivement transmettre des données, il existe plusieurs techniques connues.

Une première technique connue d'attribution du droit de transmettre des données fonctionne de la façon suivante : la station de base indique à l'ensemble des stations mobiles associées si le canal de trafic partagé du sens montant est libre ou non. S'il est libre, une station mobile qui désire transmettre des données à la station de base envoie une demande d'accès sur ce canal de trafic partagé du sens montant. La station de base répond dans le sens descendant en donnant à cette station mobile l'autorisation de transmettre des données sur le canal de trafic partagé du sens montant. Cette station mobile monopolise alors le canal de trafic jusqu'à ce qu'elle n'ait plus de données à transmettre.

Dans le sens descendant, le mode paquet ne pose aucun problème : la station de base place, dans l'intervalle de temps partagé compris dans chaque trame qu'elle émet, des données à destination d'une station mobile ainsi qu'un identificateur de cette station mobile permettant de la distinguer sans ambigüité des autres stations mobiles associées au même intervalle de temps partagé.

Par contre, dans le sens montant, le mode paquet présente plusieurs inconvénients.

Tout d'abord, lorsque deux stations mobiles effectuent en même temps une tentative d'accès sur le canal de trafic partagé (ou demande d'autorisation de transmettre des données), il y a collision. Ces deux stations mobiles doivent alors effectuer une autre tentative, par exemple après une durée aléatoire. Le nombre de stations mobiles doit rester limité afin de réduire le nombre de collisions, et donc faciliter et réduire le temps d'accès des stations mobiles à un intervalle de temps partagé.

De plus, il est clair qu'une station mobile qui a une grande quantité de données à transmettre va monopoliser l'intervalle de temps partagé pendant une longue durée. Ceci n'est pas acceptable pour les autres stations mobiles associées au même intervalle de temps partagé et qui attendent que celui-ci soit libre pour pouvoir transmettre des données.

Une seconde technique connue, visant à pallier ces inconvénients de la première technique connue, consiste à donner successivement, et après une durée fixe, l'accès à un intervalle de temps partagé à toutes les stations mobiles associées à cet intervalle de temps partagé, c'est-à-dire à toutes les stations mobiles qui, après avoir fait une demande d'allocation, se sont vues allouer cet intervalle de temps partagé pour toute la durée de leur communication.

Cette seconde technique connue permet effectivement d'empêcher qu'une station mobile monopolise l'intervalle de temps partagé. En contrepartie, elle présente l'inconvénient de donner l'accès à l'intervalle de temps partagé à des stations mobiles associées, à des instants où celles-ci n'ont rien à transmettre. En d'autres termes, l'utilisation des ressources de transmission n'est pas optimisée.

L'invention a notamment pour objectif de pallier ces différents inconvénients de l'état de la technique.

Plus précisément, l'un des objectifs de la présente invention est de fournir un procédé d'accès paquet dans un système de radiocommunication numérique cellulaire mettant en oeuvre une technique AMRT, ce procédé ne nécessitant aucune modification de la structure de trame du système dans lequel il est mis en oeuvre.

Un autre objectif de l'invention est de fournir un tel procédé dont la mise en oeuvre ne nécessite aucune ressource de transmission supplémentaire.

L'invention a également pour objectif de fournir un tel procédé, qui reste performant, en termes de partage des ressources, en présence d'un trafic de données important.

Un autre objectif de l'invention est de fournir un tel procédé qui permette de limiter le nombre de collisions d'accès, et donc de réduire les délais entre les périodes de transmission de données pour une même station mobile associée à un canal de trafic partagé.

Encore un autre objectif de l'invention est de fournir un tel procédé permettant de réaliser un contrôle de flux côté station mobile.

Ces différents objectifs, ainsi que d'autres qui apparaîtront par la suite sont atteints selon l'invention à l'aide d'un procédé de radiocommunication numérique cellulaire, dans un système à accès multiple à répartition dans le temps mis en oeuvre au sein d'un réseau de cellules géographiques parcouru par des stations mobiles, une station de base étant associée à chacune des cellules, une station mobile communiquant par l'intermédiaire de la station de base associée à la cellule dans laquelle elle se trouve,
le système véhiculant, entre la station de base associée à une cellule et les stations mobiles se trouvant dans cette cellule, des signaux organisés en trames constituées chacune de N intervalles de temps, chaque intervalle de temps pouvant être associé à une communication distincte entre la station de base et une des stations mobiles,
les trames du sens de transmission montant, des stations mobiles vers la station de base, comprenant au moins un intervalle de temps partagé qui est alloué à au moins deux stations mobiles distinctes,
pour chaque intervalle de temps partagé, le système possédant une liste des stations mobiles actives, une station mobile active étant une station mobile à laquelle est alloué cet intervalle de temps partagé et répondant à au moins un critère prédéterminé de sélection,
et, pour chaque trame du sens de transmission montant, le système associant à chaque intervalle de temps partagé une station mobile choisie, selon une stratégie prédéterminée, parmi la liste des stations mobiles actives associée à cet intervalle de temps partagé.

Le principe de l'invention est donc de différencier, parmi les stations mobiles associées à chaque intervalle de temps partagé, celles qui sont actives de celles qui ne le sont pas, et de garantir un service minimal (en termes de temps de transmission) aux stations mobiles actives. En d'autres termes, dans chaque ensemble de stations mobiles auxquelles un même intervalle de temps partagé a été alloué, on établit un sous-ensemble des stations mobiles actives.

Ainsi, en fonction d'une stratégie prédéterminée, le système donne la parole, par exemple successivement, à chacune des stations mobiles actives de la liste associée à un intervalle de temps partagé, et non pas à toutes les stations mobiles associées à cet intervalle de temps partagé (c'est-à-dire ayant obtenu l'autorisation de l'utiliser).

De cette façon, on optimise l'utilisation des ressources de transmission puisque seules les stations mobiles actives se partagent réellement un même canal de trafic (c'est-à-dire un même intervalle de temps partagé). En d'autres termes, lorsqu'une station mobile n'a plus de données à transmettre mais que sa communication n'est pas terminée, elle reste associée à l'intervalle de temps partagé mais est ôtée de la liste des stations mobiles actives. Par conséquent, le système ne lui donne plus la parole et évite que l'intervalle de temps partagé soit vide (c'est-à-dire ne transmette aucune donnée).

Le procédé de l'invention reste bien sûr performant en présence d'un trafic important. En effet, le système donne la parole (c'est-à-dire autorise l'accès effectif au canal de trafic partagé) successivement à chacune des stations mobiles actives. Par conséquent, une station mobile active qui possède une grande quantité de données à transmettre ne monopolise pas le canal de trafic partagé pendant une très longue durée mais se voit attribuer différentes périodes d'accès entre lesquelles ce sont d'autres stations mobiles actives qui peuvent transmettre des données.

La stratégie de choix d'une station mobile active dans la liste peut être définie de multiples façons. On peut par exemple choisir une technique classique d'invitations sélectives (ou "polling" en anglo-saxon) consistant à donner, successivement et pendant une durée fixe, la parole à chacune des stations mobiles actives de la liste. On peut également prévoir que le temps de parole de chaque station mobile active est de durée variable, que certaines stations mobiles actives obtiennent plus fréquemment la parole, etc...

Le procédé de l'invention permet également de :
- supprimer les collisions sur le canal de trafic partagé, puisque les stations mobiles n'émettent pas de demande d'autorisation de transmettre sur ce canal ;
- réduire les collisions sur le canal d'accès, puisque les stations mobiles ne font sur ce canal que des demandes d'allocation (pour rentrer une première fois dans la liste), et, éventuellement, des demandes d'autorisation de transmettre (pour rentrer à nouveau dans cette liste si elles en ont été sorties).

Chaque station mobile n'effectue donc que peu de tentatives d'accès par l'intermédiaire du canal d'accès. Par conséquent, le nombre de stations mobiles peut être élevé sans que les risques de collision soient trop élevés.

Il est à noter que le procédé de l'invention peut être mis en oeuvre sans aucune modification de la structure de trame, et sans ajout de ressource de transmission supplémentaire (canaux de contrôle et canaux d'accès notamment).

Préférentiellement, ladite liste de stations mobiles actives est gérée en fonction d'au moins un des critères prédéterminés de sélection suivants :
- une station mobile est insérée dans la liste des stations mobiles actives lorsqu'elle désire transmettre des données;
- une station mobile est ôtée de la liste des stations mobiles actives lorsqu'après s'être vue attribué un nombre déterminé de périodes d'accès, elle n'a transmis aucune donnée ;
- une station mobile ayant été supprimée de la liste des stations mobiles actives peut la réintégrer si elle désire à nouveau transmettre des données.

Ainsi, une station mobile associée à un intervalle de temps partagé est soit dans soit hors de la liste, et lorsqu'elle est hors de la liste, elle peut la réintégrer si nécessaire.

Avantageusement, ladite stratégie prédéterminée de choix par le système d'une station mobile active consiste à attribuer une période d'accès successivement à chacune des stations mobiles actives de ladite liste. Ainsi, on garantit un service minimal à chaque station mobile active de la liste.

Dans un premier mode de réalisation avantageux de l'invention, l'espace de temps entre deux périodes d'accès pour une même station mobile active est fixe, la durée maximale de chacune des périodes d'accès étant fonction du nombre de stations mobiles actives de ladite liste.

Dans un second mode de réalisation avantageux de l'invention, la durée maximale de chacune des périodes d'accès est fixe, l'espace de temps entre deux périodes d'accès pour une même station mobile active étant fonction du nombre de stations mobiles actives de ladite liste.

Il est clair que si elle n'a plus rien à transmettre, la station mobile peut arrêter de transmettre des données avant la fin de la durée maximale de la période d'accès qui lui est attribuéee. Dans ce cas, l'intervalle de temps partagé peut être utilisé par une autre station mobile.

Préférentiellement, la gestion de la liste des stations mobiles actives est réalisée dans la station de base.

Dans un mode de réalisation préférentiel de l'invention, une station mobile devient active lorsqu'après avoir envoyé au système, sur un intervalle de temps dédié à un canal d'accès, une demande d'allocation d'un intervalle de temps partagé, le système lui renvoie une réponse favorable. Ainsi, dans le cas d'un système GSM, le canal d'accès est un RACH.

Avantageusement une station mobile redevient active en envoyant au système, sur ledit intervalle de temps dédié à un canal d'accès, une demande d'autorisation de transmettre des données.

De façon avantageuse, le système contrôle l'encombrement dudit canal d'accès, et modifie, en fonction dudit encombrement du canal d'accès, le nombre prédéterminé de périodes d'accès après lequel une station mobile est ôtée de la liste des stations mobiles actives si elle n'a transmis aucune donnée.

Ainsi, on peut limiter la surcharge du canal d'accès en conservant les stations mobiles actives plus longtemps sur la liste, même si elles ne transmettent pas de données. En effet, on réduit alors le nombre de demandes d'autorisations de transmettre provenant de stations mobiles désirant redevenir actives.

Préférentiellement, lorsqu'une station mobile devient active pour la première fois, le système tient compte, pour le choix de l'intervalle de temps partagé auquel doit être associée cette nouvelle station mobile active, du nombre de stations mobiles actives déjà associées aux différents intervalles de temps partagés.

De cette façon, le système ne tient pas compte uniquement du nombre de stations mobiles auxquelles chaque intervalle de temps partagé a déjà été alloué, mais également du nombre de stations mobiles actives parmi ces stations mobiles associées. Le système peut par exemple décider, si la proportion de stations mobiles actives est faible par rapport au nombre total de stations mobiles associées à un intervalle de temps partagé, de continuer à autoriser l'accès de nouvelles stations mobiles sur cet intervalle de temps partagé.

Avantageusement, une station mobile active d'une première liste associée à un premier intervalle de temps partagé peut être transférée dynamiquement dans une seconde liste associée à un second intervalle de temps partagé.

En effet, le nombre de stations mobiles actives permet de connaître les bornes supérieure et inférieure du trafic que peut écouler une station mobile. Par conséquent, il est possible d'effectuer un contrôle de flux côté station mobile, et décider d'un éventuel transfert dynamique de liste, c'est-à-dire une réallocation à une station mobile active d'un autre intervalle de temps partagé.

De façon avantageuse, le transfert dynamique d'une station mobile active d'une première vers une seconde liste est réalisé si au moins une des conditions suivantes est réalisée :
- le nombre de stations mobiles actives de la première liste est supérieur à un nombre seuil prédéterminé ;
- la station mobile active possède une quantité de données à transmettre supérieure à une quantité seuil prédéterminée.
Si une station mobile active transmet des données sous la forme de blocs de données, alors, avantageusement, une station mobile active en cours de transmission ajoute à chacun desdits blocs de données une première information précisant s'il lui reste ou non des données à transmettre.

Préférentiellement, au moins deux blocs de données d'une même station mobile active sont entrelacés simultanément sur au moins deux intervalles de temps partagés associés à cette même station mobile active, à raison d'un intervalle de temps partagé par trame du sens montant,
et chaque intervalle de temps partagé étant divisé en au moins deux parties recevant chacune une portion d'un des blocs entrelacés simultanément.

Dans ce cas, avantageusement, ladite première information est ajoutée à un seul desdits blocs de données entrelacés simultanément. De cette façon, si les blocs de données sont de taille fixe, des informations supplémentaires peuvent être ajoutées, à la place de la première information, dans les blocs de données entrelacés simultanément auxquels cette première information n'a pas été ajoutée.

De même, si le système transmet, dans le sens descendant, des données sous la forme de blocs de données alors, avantageusement, le système, en fonction de ladite stratégie prédéterminée de choix, ajoute à chacun desdits blocs de données :
- une seconde information précisant à quelle station mobile active de la liste est attribuée la période d'accès suivante du sens de transmission montant ;
- une troisième information précisant à quelle station mobile active est destiné le bloc de données.

Lesdites seconde et troisième informations sont par exemple ajoutées au niveau d'un sous-système de station de base auquel appartient la station de base.

Préférentiellement, au moins deux blocs de données du sens descendant destinés à une même station mobile sont entrelacés simultanément sur au moins deux intervalles de temps associés à cette même station mobile, à raison d'un intervalle de temps par trame du sens descendant,
et chaque intervalle de temps partagé étant divisé en au moins deux parties recevant chacune une portion d'un des blocs entrelacés simultanément.

Dans ce cas, avantageusement, au moins une desdites seconde et troisième informations est ajoutée à un seul desdits blocs de données entrelacés simultanément. De cette façon, si les blocs de données sont de taille fixe, des informations supplémentaires peuvent être ajoutées, à la place d'au moins une des seconde et troisième informations, dans les blocs de données entrelacés simultanément auxquels au moins une des seconde et troisième informations n'a pas été ajoutée.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre de façon schématique un exemple de système de radiocommunication cellulaire dans lequel le procédé de l'invention peut être mis en oeuvre ;
- la figure 2 présente un exemple de structure et d'utilisation d'une trame avec un procédé selon l'invention ;
- la figure 3 illustre de façon schématique un exemple de liste de stations mobiles actives parmi un ensemble de stations mobiles associées à un même canal de trafic selon le procédé de l'invention ;
- la figure 4 illustre un exemple de stratégie de choix d'une station mobile active pour un intervalle de temps partagé ;
- la figure 5 présente un exemple d'organigramme du procédé de l'invention ;
- les figures 6 et 7 présentent chacune un exemple de bloc de données transmis, respectivement dans le sens montant et descendant ;
- la figure 8 illustre de façon schématique un exemple d'entrelacement de blocs de données correspondant à un mode de réalisation particulier du procédé de l'invention ; et
- les figures 9 et 10 présentent chacune un exemple de transmission d'informations supplémentaires dans des blocs de données destinés à être entrelacés comme illustré sur la figure 8, pour des blocs de données respectivement du sens montant et du sens descendant.

L'invention concerne donc un procédé d'accès paquet dans un système de radiocommunication numérique cellulaire.

Dans la suite de la description, le système est du type conçu selon le standard de radiotélécommunication public GSM. Il est clair toutefois que l'invention n'est pas limitée à ce type particulier de système.

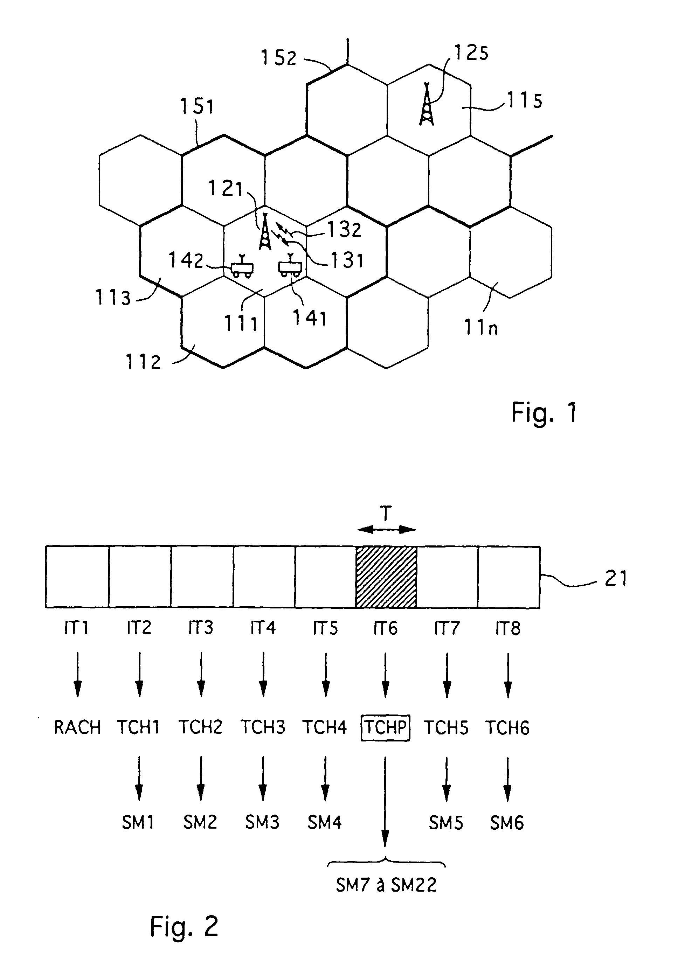

La figure 1 illustre de façon schématique un exemple d'un tel système de radiocommunication. Le territoire couvert par le système de radiocommunication est divisé en cellules 11₁ à 11ₙ. Chaque cellule 11₁, 11₅ comprend une station de base 12₁, 12₅ capable d'échanger des trames de signaux 13₁, 13₂ avec une pluralité de mobiles 14₁, 14₂ circulant dans ladite cellule 11₁. L'allocation des fréquences est basée sur une organisation des cellules en motifs 15₁, 15₂ de sept cellules. Les cellules d'un même motif exploitent des bandes de fréquence distinctes. En revanche, d'un motif 15₁ à l'autre 15₂, les bandes de fréquences sont réutilisées.

La figure 2 présente un exemple de structure de trame dans le cas où le système de radiocommunication met en oeuvre une technique de multiplexage temporel de type AMRT (Accès Multiple à Répartition dans le Temps).

La trame 21 est constituée de N intervalles de temps IT 1 à IT8 (N = 8, dans cet exemple). Chaque intervalle de temps, de durée T, peut être associé à un canal de transmission. Dans l'exemple présenté sur la figure 2, un intervalle de temps IT1 est associé à un canal d'accès (RACH, pour Random Access CHannel) et les autres intervalles de temps IT2 à IT 8 sont chacun associés à un canal de trafic (TCH, pour Traffic CHannel).

Les intervalles de temps IT2 à IT8 associés à un canal de trafic sont alloués soit selon un mode circuit, soit selon un mode paquet. Dans une même trame, les deux modes d'allocation (circuit ou paquet) peuvent exister simultanément : certains intervalles de temps sont alors alloués en mode circuit et d'autres en mode paquet.

En mode circuit, un intervalle de temps IT2 à IT5, IT7, IT8 est alloué à une station mobile SM1 à SM4, SM5, SM6 pour toute la durée de la communication de cette station mobile. Chaque station mobile possède donc son propre canal de trafic TCH1 à TCH4, TCH5, TCH6.

En mode paquet, un intervalle de temps IT6 est alloué à une pluralité de stations mobiles SM7 à SM 22, qui se partagent donc le canal de trafic correspondant TCHP. On parle alors d'intervalle de temps partagé ou encore de canal de trafic partagé.

L'invention concerne précisément un procédé ou protocole d'accès à un intervalle de temps partagé.

Selon le procédé de l'invention, le système possède pour chaque canal de trafic partagé une liste de stations mobiles actives, c'est-à-dire une liste de stations mobiles qui non seulement se sont vues allouer cet intervalle de temps partagé mais en plus répondent à un ou plusieurs critères de sélection (par exemple, ne pas être restée trop longtemps sans avoir des données à transmettre).

Une station mobile peut être insérée dans la liste, en être ôtée, ou encore la réintégrer, comme cela est expliqué par la suite, en relation avec la figure 5.

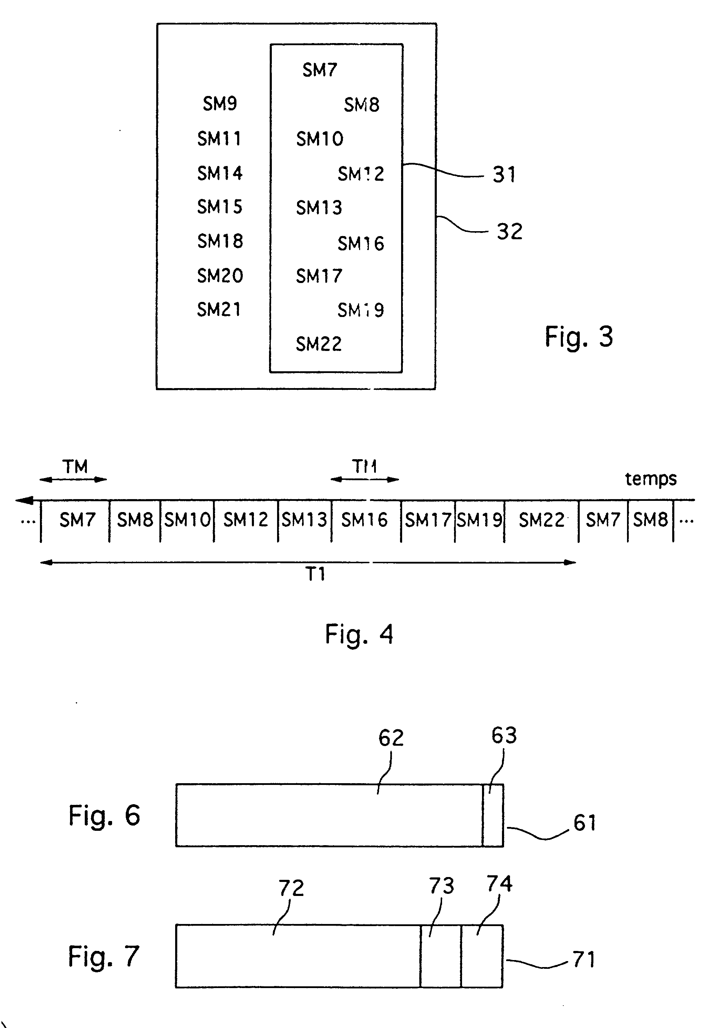

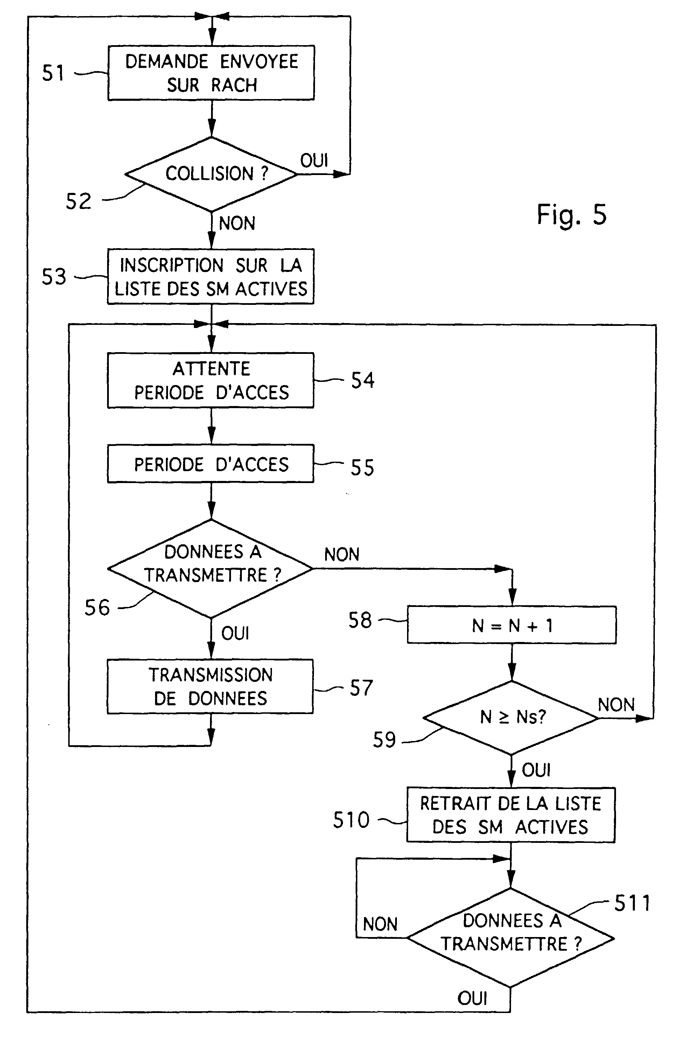

Dans le sens de transmission montant (station mobile vers station de base), seules les stations mobiles de la liste ont réellement accès au canal de trafic partagé TCHP. En d'autres termes, seules les stations mobiles actives se partagent le canal de trafic partagé TCHP. Ainsi, comme illustré schématiquement sur la figure 3, la liste 31 des stations mobiles actives SM7, SM8, SM10, SM12, SM13, SM16, SM17, SM19, SM22 associées à un canal de trafic partagé TCHP est un sous-ensemble de l'ensemble 32 des stations mobiles SM7 à SM22 auxquelles ce canal de trafic partagé TCHP a été alloué.

Pour chaque trame successive du sens montant, le système choisit une station mobile active de la liste selon une stratégie prédéterminée. La figure 4 illustre un exemple d'une telle stratégie de choix, avec la liste de stations mobiles actives présentée sur la figure 3. Dans cet exemple, le système donne la parole successivement à chacune des stations mobiles de la liste. La période d'accès d'une station mobile au canal de trafic partagé (c'est-à-dire la période pendant laquelle elle peut transmettre des données) se termine soit lorsque cette station mobile n'a plus de données à transmettre, soit lorsque la durée maximale est atteinte. Dans ce dernier cas, la station mobile doit attendre sa période d'accès suivante pour continuer à transmettre ses données.

Dans l'exemple de la figure 4, l'espace de temps T1 entre deux périodes d'accès pour une même station mobile active est fixe. Par conséquent, la durée maximale TM de chaque période d'accès est fonction du nombre de stations mobiles actives de la liste.

Selon une variante, non illustrée, c'est l'espace de temps entre deux périodes d'accès pour une même station mobile active qui est fixe. La durée maximale de chaque période d'accès est alors fonction du nombre de stations mobiles actives de la liste.

La figure 5 présente un exemple d'organigramme du procédé de l'invention.

Lorsqu'une station mobile désire transmettre des données pour la première fois, elle envoie (51) sur le canal d'accès une demande d'allocation d'un intervalle de temps partagé.

Si une autre station mobile a transmis une demande au même moment, il y a collision (52) et les deux stations mobiles doivent faire une nouvelle tentative.

S'il n'y a pas collision, le système enregistre la demande et alloue un intervalle de temps partagé à la station mobile : cette station mobile est inscrite (53) sur la liste des stations mobiles actives associées à cet intervalle de temps partagé. De plus, un identificateur est associé à chaque station mobile au moment de l'allocation, de façon à la distinguer sans ambigüité des autres stations mobiles associées au même intervalle de temps partagé. En d'autres termes, les stations mobiles associées à un même intervalle de temps partagé possèdent chacune un identificateur distinct. Par contre, deux stations mobiles associées à deux intervalles de temps partagés distincts peuvent posséder un même identificateur.

Ensuite, la station mobile attend (54) que le système lui attribue une période d'accès au canal de trafic correspondant à l'intervalle de temps partagé qui lui a été alloué.

Lorsque la station mobile se voit attribuer une période d'accès (55), plusieurs cas peuvent se présenter selon qu'elle a ou non des données à transmettre (56).

si la station mobile a des données à transmettre, elle les transmet (57) pendant cette période d'accès, puis attend (54) une nouvelle période d'accès (sauf, bien sûr, si sa communication est terminée).

si la station mobile n'a pas de données à transmettre, le système incrémente (58) de un le nombre N de périodes d'accès successives attribuées à cette station mobile sans qu'elle transmette des données, puis compare (59) le nombre incrémenté à un nombre seuil Nₛ déterminé et pouvant être variable. Si N < Nₛ, la station mobile attend (54) une nouvelle période d'accès (et elle fait toujours partie de la liste). Si N ≥ Nₛ, la station mobile est retirée (510) de la liste des stations mobiles actives.

On peut envisager d'indiquer à la station mobile que c'est son dernier essai avant d'être ôtée de la liste, de façon que celle-ci sache précisément à partir de quand elle ne fait plus partie de la liste. En effet, sinon, une station mobile ne peut savoir qu'elle n'est plus dans la liste que si, après une certaine durée, le système ne lui a pas redonné la parole. En permettant à la station mobile de savoir exactement quand elle est ôtée de la liste, le système évite à la station mobile d'attendre inutilement une période d'accès. Ainsi, lorsque cette station mobile est ôtée de la liste puis veut à nouveau transmettre des données, elle fait immédiatement une demande d'autorisation de transmettre afin de réintégrer la liste (sans attendre, en croyant être encore dans la liste, que le système lui donne la parole).

Lorsqu'elle apprend que c'est son dernier essai avant d'être ôtée de la liste, une station mobile peut éventuellement transmettre des données quelconques, uniquement dans le but de rester dans cette liste.

Après avoir été retirée de la liste, si la station mobile a des données à transmettre (511), elle peut réintégrer la liste si elle transmet (51) une demande d'autorisation de transmettre des données (en précisant quel intervalle de temps lui a déjà été alloué).

Le procédé de l'invention peut présenter de nombreuses autres caractéristiques. On peut par exemple prévoir que le système, en fonction de l'encombrement du canal d'accès (RACH), modifie le nombre seuil Nₛ après lequel une station mobile est ôtée de la liste des stations mobiles actives si elle n'a rien transmis.

Le système peut aussi, pour savoir à quel intervalle de temps associer une station mobile, tenir compte du nombre de stations mobiles actives (et non pas simplement associées à) de chacun des intervalles de temps partagés.

On peut même envisager des transferts dynamiques entre intervalles de temps partagés, par exemple si une station mobile a une grande quantité de données à transmettre et/ou s'il y a un nombre important de stations mobiles actives dans la liste à laquelle appartient cette station mobile.

On peut également prévoir des niveaux de priorité à l'intérieur de la liste des stations mobiles actives. Par exemple, une station mobile qui vient de rentrer dans la liste peut être considérée comme plus prioritaire et obtenir plus rapidement la parole qu'une station mobile active qui après plusieurs périodes d'accès n'a rien transmis.

Les données transmises par une station de base ou une station mobile active se présentent généralement sous la forme de blocs de données. La suite de la description présente plus précisément des exemple de blocs de données, ainsi qu'un mode de réalisation particulier d'entrelacement de ces blocs de données.

La figure 6 présente un exemple de blocs de données transmis dans le sens montant. Ce bloc de données 61 est constitué d'un bloc de données "classique" 62 auquel on a ajouté une première information 63. Par blocs de données "classique" 62, on entend, par exemple dans le cas du GSM, un bloc (ou une trame) RLP pouvant être contenu dans quatre intervalles de temps et comprenant un entête, des données utiles et une séquence de contrôle de trame. La première information 63 permet à la station mobile d'indiquer à la station de base s'il lui reste ou non des données à transmettre. Un élément binaire suffit donc pour cette première information.

La figure 7 présente un exemple de bloc de données transmis dans le sens descendant. Ce bloc de données 71 est constitué d'un bloc de données "classique" 72 (cf précédemment), auquel on a ajouté (par exemple dans le sous-système de station de base de cette station de base) une seconde 73 et une troisième 74 informations.

La seconde information 73 permet au système de préciser à quelle station mobile active sera attribuée la période d'accès suivante à l'intervalle de temps partagé.

La troisième information 74 est un identificateur de station mobile pour un intervalle de temps partagé donné. Cet identificateur, déjà discuté auparavant, permet au système d'indiquer à quelle station mobile active (parmi les stations mobiles actives associées à cet intervalle de temps partagé donné) est destiné le bloc de données 71.

Ainsi, avec une longueur de quatre éléments binaires pour la seconde, respectivement troisième, information, le système peut donner la parole, respectivement envoyer des données, à une station mobile parmi seize.

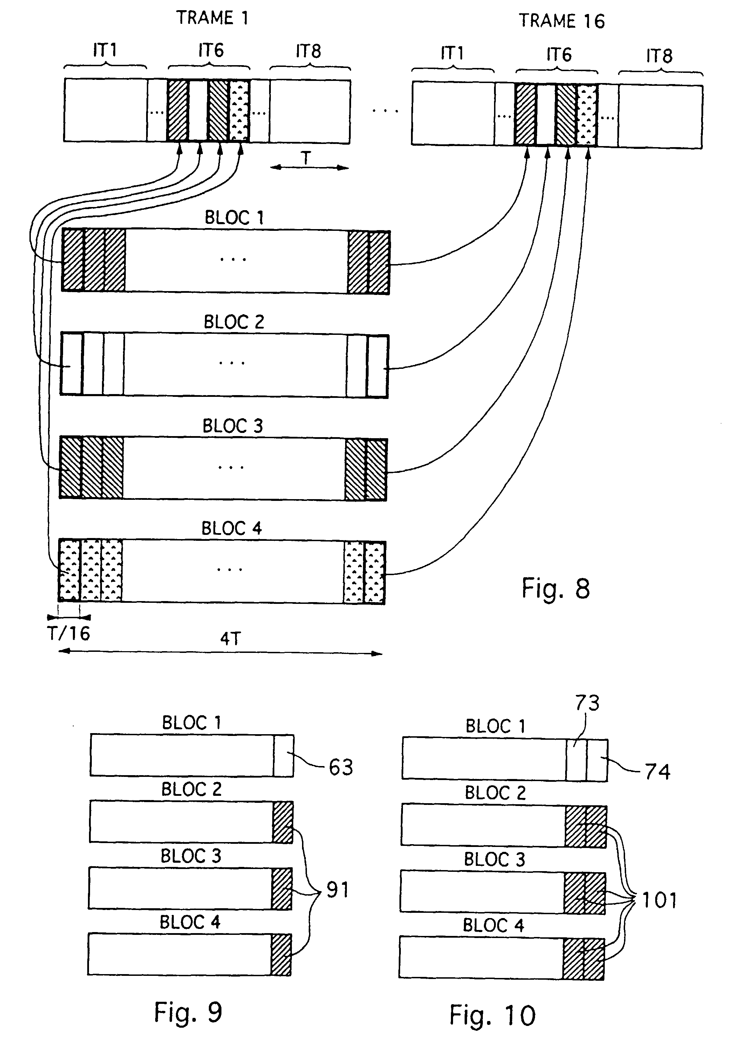

La figure 8 illustre de façon schématique un exemple d'entrelacement de blocs de données (du sens montant ou descendant).

Dans cet exemple, chaque trame TRAME 1 à TRAME 16 comprend huit intervalles de temps IT1 à IT8 de durée T, dont un intervalle de temps partagé IT6. Quatre blocs de données BLOC 1 à BLOC4 d'une même communication sont entrelacés simultanément (entrelacement dit rectangulaire) sur seize trames TRAME 1 à TRAME 16 consécutives. Pour cela, l'intervalle de temps partagé IT6 de chaque trame est divisé en quatre et reçoit un seizième de chacun des quatre blocs de données BLOC 1 à BLOC 4.

Il est clair que d'autres modes de réalisation de l'entrelacement rectangulaire peuvent être mis en oeuvre. Par exemple, on peut entrelacer deux blocs de données sur huit trames, en divisant chaque intervalle de temps partagé en deux. De même, on peut envisager d'autres tailles de blocs de données (celles-ci étant fonction des taux de codage).

Comme présenté sur la figure 9, pour les blocs de données du sens montant, et sur la figure 10, pour les blocs de données du sens descendant, l'entrelacement rectangulaire permet, dans le cas de l'invention, de transmettre des informations supplémentaires.

En effet, les blocs entrelacés simultanément appartiennent à une même communication. Par conséquent, la ou les informations 63, 73, 74 à ajouter aux blocs de données "classiques" 62, 72 peuvent ne l'être que pour un bloc de données de chaque groupe de blocs entrelacés simultanément.

Ainsi, dans le sens montant, comme présenté sur la figure 9, un bloc de données BLOC 1 comprend la première information 63 et les autres blocs BLOC 2 à BLOC 4 disposent de place libre 91 pour transmettre des informations supplémentaires.

De même, dans le sens descendant, comme présenté sur la figure 10, un bloc de données BLOC 1 comprend la seconde et la troisième informations 73, 74 et les autres blocs BLOC 2 À BLOC 4 disposent de place libre 101 pour transmettre des informations supplémentaires.

Dans le sens montant, les informations supplémentaires 91 sont par exemple des données de signalisation.

Dans le sens descendant, il peut s'agir de données de surcodage de l'identificateur ou de données permettant un contrôle de flux côté station mobile (par exemple, la station de base indique à la station mobile combien de stations mobiles sont actives, ce qui permet à la station mobile de savoir de combien de temps de transmission elle va disposer ; ou encore, la station de base prévient la station mobile qu'elle va bien être retirée de la liste, ce qui permet à la station mobile d'anticiper un envoi de données (pour rester dans la liste et éviter d'avoir à effectuer, par l'intermédiaire du RACH), une demande d'autorisation de transmettre des données sur la canal de trafic partagé.

L'invention a été décrite en rapport avec un système de radiocommunication cellulaire car l'optimisation de l'utilisation des canaux de trafic se pose avec une acuité toute particulière dans de tels systèmes. Cependant, il est clair que l'invention trouve application dans tout type de système de transmission, quelque soit le support de transmission. On pense notamment aux réseaux radio non cellulaires (particulièrement dans les bandes de fréquence dites à usage ISM pour l'expression anglo-saxonne "Industrial Scientific and Medical"), aux réseaux filaires, aux réseaux à fibres optiques, qu'il s'agisse de réseaux à grande couverture ou bien de réseaux locaux.

En effet, l'invention propose une solution générale au problème posé par la gestion d'un canal partagé entre plusieurs utilisateurs.

## Revendications

1. Procédé de radiocommunication numérique cellulaire, dans un système à accès multiple à répartition dans le temps mis en oeuvre au sein d'un réseau de cellules géographiques (11₁ à 11ₙ) parcouru par des stations mobiles (14₁, 14₂ ; SM1 à SM22), une station de base (12₁, 12₅) étant associée à chacune des cellules, une station mobile communiquant par l'intermédiaire de la station de base associée à la cellule dans laquelle elle se trouve,
le système véhiculant, entre la station de base associée à une cellule et les stations mobiles se trouvant dans cette cellule, des signaux organisés en trames (21) constituées chacune de N intervalles de temps (IT1 à IT8), chaque intervalle de temps pouvant être associé à une communication distincte entre la station de base et une des stations mobiles,
les trames du sens de transmission montant, des stations mobiles vers la station de base, comprenant au moins un intervalle de temps partagé (IT6) qui est alloué à au moins deux stations mobiles distinctes (SM7 à SM22),
caractérisé en ce que, pour chaque intervalle de temps partagé (IT6), le système possède une liste (31) des stations mobiles actives, une station mobile active étant une station mobile à laquelle est alloué cet intervalle de temps partagé et répondant à au moins un critère prédéterminé de sélection,
et en ce que, pour chaque trame du sens de transmission montant, le système associe à chaque intervalle de temps partagé une station mobile choisie, selon une stratégie prédéterminée, parmi la liste (31) des stations mobiles actives associée à cet intervalle de temps partagé.

2. Procédé selon la revendication 1, caractérisé en ce que ladite liste (31) de stations mobiles actives est gérée en fonction d'au moins un des critères prédéterminés de sélection suivants :
- une station mobile est insérée (53) dans la liste des stations mobiles actives lorsqu'elle désire transmettre des données;
- une station mobile est ôtée (510) de la liste des stations mobiles actives lorsqu'après s'être vue attribué un nombre déterminé (Nₛ) de périodes d'accès, elle n'a transmis aucune donnée ;
- une station mobile ayant été supprimée de la liste des stations mobiles actives peut la réintégrer si elle désire à nouveau transmettre des données.

3. Procédé selon l'une quelconque des revendications 1 et 2, caractérisé en ce que ladite stratégie prédéterminée de choix par le système d'une station mobile active consiste à attribuer une période d'accès successivement à chacune des stations mobiles actives de ladite liste.

4. Procédé selon la revendication 3, caractérisé en ce que l'espace de temps (T1) entre deux périodes d'accès pour une même station mobile active est fixe, la durée maximale (TM) de chacune des périodes d'accès étant fonction du nombre de stations mobiles actives de ladite liste.

5. Procédé selon la revendication 3, caractérisé en ce que la durée maximale de chacune des périodes d'accès est fixe, l'espace de temps entre deux périodes d'accès pour une même station mobile active étant fonction du nombre de stations mobiles actives de ladite liste.

6. Procédé selon l'une quelconque des revendications 1 à 5, caractérisé en ce que la gestion de la liste des stations mobiles actives est réalisée dans la station de base.

7. Procédé selon l'une quelconque des revendications 1 à 6, caractérisé en ce qu'une station mobile devient active (53) lorsqu'après avoir envoyé (51) au système, sur un intervalle de temps dédié à un canal d'accès, une demande d'allocation d'un intervalle de temps partagé, le système lui renvoie une réponse favorable.

8. Procédé selon la revendication 7, caractérisé en ce qu'une station mobile redevient active en envoyant (51) au système, sur ledit intervalle de temps dédié à un canal d'accès, une demande d'autorisation de transmettre des données.

9. Procédé selon la revendication 7, caractérisé en ce que système contrôle l'encombrement dudit canal d'accès (RACH), et en ce que le système modifie, en fonction dudit encombrement du canal d'accès, le nombre prédéterminé de périodes d'accès après lequel une station mobile est ôtée de la liste des stations mobiles actives si elle n'a transmis aucune donnée.

10. Procédé selon l'une quelconque des revendications 1 à 9, caractérisé en ce que lorsqu'une station mobile devient active pour la première fois, le système tient compte, pour le choix de l'intervalle de temps partagé auquel doit être associée cette nouvelle station mobile active, du nombre de stations mobiles actives déjà associées aux différents intervalles de temps partagés.

11. Procédé selon l'une quelconque des revendications 1 à 10, caractérisé en ce qu'une station mobile active d'une première liste associée à un premier intervalle de temps partagé peut être transférée dynamiquement dans une seconde liste associée à un second intervalle de temps partagé.

12. Procédé selon la revendication 11, caractérisé en ce que le transfert dynamique d'une station mobile active d'une première vers une seconde liste est réalisé si au moins une des conditions suivantes est réalisée :
- le nombre de stations mobiles actives de la première liste est supérieur à un nombre seuil prédéterminé ;
- la station mobile active possède une quantité de données à transmettre supérieure à une quantité seuil prédéterminée.

13. Procédé selon l'une quelconque des revendications 1 à 12, une station mobile active transmettant des données sous la forme de blocs de données (62), caractérisé en ce qu'une station mobile active en cours de transmission ajoute à chacun desdits blocs de données une première information (63) précisant s'il lui reste ou non des données à transmettre.

14. Procédé selon la revendication 13, caractérisé en ce qu'au moins deux blocs de données (BLOC 1 à BLOC 4) d'une même station mobile active sont entrelacés simultanément sur au moins deux intervalles de temps partagés (IT6) associés à cette même station mobile active, à raison d'un intervalle de temps partagé par trame du sens montant,
et en ce que chaque intervalle de temps partagé est divisé en au moins deux parties recevant chacune une portion d'un des blocs entrelacés simultanément.

15. Procédé selon la revendication 14, caractérisé en ce que ladite première information (63) est ajoutée à un seul (BLOC 1) desdits blocs de données entrelacés simultanément.

16. Procédé selon la revendication 15, caractérisé en ce que les blocs de données sont de taille fixe, et en ce que des informations supplémentaires (91) sont ajoutées, à la place de la première information (63), dans les blocs de données (BLOC 2 à BLOC 4) entrelacés simultanément auxquels cette première information n'a pas été ajoutée.

17. Procédé selon l'une quelconque des revendications 1 à 16, le système transmettant, dans le sens descendant, des données sous la forme de blocs de données (71), caractérisé en ce que le système, en fonction de ladite stratégie prédéterminée de choix, ajoute à chacun desdits blocs de données :
- une seconde information (73) précisant à quelle station mobile active de la liste est attribuée la période d'accès suivante du sens de transmission montant ;
- une troisième information (74) précisant à quelle station mobile active est destiné le bloc de données.

18. Procédé selon la revendication 17, caractérisé en ce que lesdites seconde et troisième informations sont ajoutées au niveau d'un sous-système de station de base auquel appartient la station de base.

19. Procédé selon l'une quelconque des revendications 17 et 18, caractérisé en ce qu'au moins deux blocs de données (BLOC 1 à BLOC 4) du sens descendant destinés à une même station mobile sont entrelacés simultanément sur au moins deux intervalles de temps associés à cette même station mobile, à raison d'un intervalle de temps par trame du sens descendant,
et en ce que chaque intervalle de temps partagé est divisé en au moins deux parties recevant chacune une portion d'un des blocs entrelacés simultanément.

20. Procédé selon la revendication 19, caractérisé en ce que au moins une desdites seconde et troisième informations est ajoutée à un seul (BLOC 1) desdits blocs de données entrelacés simultanément.

21. Procédé selon la revendication 20, caractérisé en ce que les blocs de données sont de taille fixe, et en ce que des informations supplémentaires (101) sont ajoutées, à la place d'au moins une des seconde et troisième informations (73, 74), dans les blocs de données (BLOC 2 à BLOC 4) entrelacés simultanément auxquels au moins une des seconde et troisième informations n'a pas été ajoutée.

## Patentansprüche

1. Verfahren der digitalen zellularen Funkkommunikation in einem System mit Zeitlagenzugriff, das innerhalb eines Netzes von geographischen Zellen (11₁ bis 11ₙ) angewendet wird, das von Mobilstationen (14₁, 14₂; SM1 bis SM22) durchlaufen wird, wobei eine Basisstation (12₁, 12₅) einer jeden der Zellen zugeordnet ist, und eine Mobilstation über die Basisstation kommuniziert, die der Zelle, in der sie sich befindet, zugeordnet ist,
wobei das System zwischen der Basisstation, die einer Zelle zugeordnet ist, und den Mobilstationen, die sich in dieser Zelle befinden, Signale transportiert, die in Form von Rahmen (21) organisiert sind, die jeder aus N Zeitintervallen (IT1 bis IT8) bestehen, wobei jedes Zeitintervall einer anderen Kommunikation zwischen der Basisstation und einer der Mobil stationen zugeordnet sein kann,
wobei die Rahmen in Aufwärts-Übertragungsrichtung von den Mobilstationen zu der Basisstation wenigstens ein gemeinsam benutztes Zeitintervall (IT6) umfassen, das wenigstens zwei unterschiedlichen Mobilstationen (SM7 bis SM22) zugewiesen ist,
dadurch gekennzeichnet, daß für jedes gemeinsam benutzte Zeitintervall (IT6) das System eine Liste (31) der aktiven Mobilstationen besitzt, wobei eine aktive Mobilstation eine Mobilstation ist, der dieses gemeinsam benutzte Zeitintervall zugewiesen worden ist, und die zumindest einem vorbestimmten Auswahlkriterium entspricht, und
daß für jeden Rahmen in Aufwärts-Übertragunsrichtung das System jedem gemeinsam benutzten Zeitintervall eine ausgewählte Mobilstation gemäß einer vorbestimmten Strategie aus der Liste (31) der aktiven Mobilstationen zuordnet, die diesem gemeinsam benutzten Zeitintervall zugeordnet sind.

2. Verfahren nach Anspruch 1, dadurch gekennzeichnet, daß die besagte Liste (31) der aktiven Mobilstationen in Abhängigkeit von wenigstens einem der folgenden vorbestimmten Auswahlkriterien verwaltet wird:
- eine Mobilstation wird in die Liste der aktiven Mobilstationen eingefügt (53), wenn sie Daten zu übertragen wünscht;
- eine Mobilstation wird aus der Liste der aktiven Mobilstationen entfernt (510), wenn sie, nachdem sie eine bestimmte Anzahl (Nₛ) von Zugriffsperioden zugeteilt bekommen hat, keine Daten übertragen hat;
- eine Mobilstation, die aus der Liste der aktiven Mobil stationen entfernt worden ist, kann reintegriert werden, wenn sie von neuem Daten zu übertragen wünscht.

3. Verfahren nach einem beliebigen der Ansprüche 1 und 2, dadurch gekennzeichnet, daß die besagte vorbestimmte Strategie zur Auswahl einer aktiven Mobilstation durch das System darin besteht, eine Zugriffsperiode nacheinander jeder der aktiven Mobilstationen der besagten Liste zuzuteilen.

4. Verfahren nach Anspruch 3, dadurch gekennzeichnet, daß der Zeitraum (T1) zwischen zwei Zugriffsperioden für eine gleiche aktive Mobil station fest ist, wobei die maximale Dauer (TM) von jeder Zugriffsperiode von der Anzahl der aktiven Mobilstationen der besagten Liste abhängt.

5. Verfahren nach Anspruch 3, dadurch gekennzeichnet, daß die maximale Dauer von jeder der Zugriffsperioden fest ist, wobei der Zeitraum zwischen zwei Zugriffsperioden für eine gleiche aktive Mobilstation von der Zahl der aktiven Mobilstationen der besagten Liste abhängt.

6. Verfahren nach einem beliebigen der Ansprüche 1 bis 5, dadurch gekennzeichnet, daß die Verwaltung der Liste der aktiven Mobilstationen in der Basisstation verwirklicht wird.

7. Verfahren nach einem beliebigen der Ansprüche 1 bis 6, dadurch gekennzeichnet, daß eine Mobilstation aktiv wird (53), wenn, nachdem sie dem System auf einem dem Zugriffskanal gewidmeten Zeitintervall eine Zuweisungsanforderung für ein gemeinsam benutztes Zeitintervall geschickt hat (51), das System ihr eine günstige Antwort zurückschickt.

8. Verfahren nach Anspruch 7, dadurch gekennzeichnet, daß eine Mobilstation wieder aktiv wird, in dem sie an das System auf dem einem Zugriffskanal gewidmeten Zeitintervall eine Erlaubnisanforderung zum Übertragen von Daten sendet (51).

9. Verfahren nach Anspruch 7, dadurch gekennzeichnet, daß das System die Auslastung des besagten Zugriffskanals (RACH) kontrolliert und daß das System in Abhängigkeit von der Auslastung des Zugriffskanales die vorbestimmte Anzahl von Zugriffsperioden, nach welcher eine Mobilstation aus der Liste der aktiven Mobilstationen entfernt wird, wenn sie keine Daten übertragen hat, verändert.

10. Verfahren nach einem beliebigen der Ansprüche 1 bis 9, dadurch gekennzeichnet, daß, wenn eine Mobilstation zum ersten Mal aktiv wird, das System für die Wahl des gemeinsam benutzten Zeitintervalls, dem diese neue aktive Mobilstation zugeordnet werden soll, die Anzahl der schon verschiedenen gemeinsam benutzten Zeitintervallen zugeordneten aktiven Mobilstationen berücksichrigt.

11. Verfahren nach einem beliebigen der Ansprüche 1 bis 10, dadurch gekennzeichnet, daß eine aktive Mobilstation von einer ersten Liste, die einem ersten gemeinsam benutzten Zeitintervall zugeordnet ist, dynamisch in eine zweite Liste, die einem zweiten gemeinsam benutzten Zeitintervall zugeordnet ist, übertragen werden kann.

12. Verfahren nach Anspruch 11, dadurch gekennzeichnet, daß die dynamische Übertragung einer aktiven Mobilstation von einer ersten zu einer zweiten Liste verwirklicht wird, wenn wenigstens eine der nachfolgenden Bedingungen verwirklicht ist:
- die Anzahl der aktiven Mobilstationen der ersten Liste ist größer als eine vorbestimmte Schwellzahl;
- die aktive Mobilstation besitzt eine Menge von zu übertragenden Daten, die größer ist als eine vorbestimmte Schwellmenge.

13. Verfahren nach einem beliebigen der Ansprüche 1 bis 12, wobei eine aktive Mobilstation Daten in Form von Datenblöcken (62) überträgt, dadurch gekennzeichnet, daß eine aktive Mobilstation im Laufe der Übertragung zu jedem der besagten Datenblöcke eine erste Information (63) hinzufügt, die angibt, ob sie noch zu übertragende Daten hat oder nicht.

14. Verfahren nach Anspruch 13, dadurch gekennzeichnet, daß wenigstens zwei Datenblöcke (BLOC 1 bis BLOC 4) einer gleichen aktiven Mobilstation gleichzeitig auf wenigstens zwei gemeinsam benutzten Zeitintervallen (IT6), die dieser gleichen aktiven Mobilstation zugeordnet sind, im Verhältnis von einem gemeinsam benutzten Zeitintervall pro Rahmen in Aufwärtsrichtung miteinander geschachtelt werden,
und daß jedes gemeinsam benutzte Zeitintervall in wenigstens zwei Teile geteilt wird, die jeder einen Abschnitt eines der gleichzeitig geschachtelten Blöcke aufnehmen.

15. Verfahren nach Anspruch 14, dadurch gekennzeichnet, daß die besagte erste Information (63) zu einem einzigen der besagten gleichzeitig geschachtelten Datenblöcke (BLOC 1) hinzugefügt wird.

16. Verfahren nach Anspruch 15, dadurch gekennzeichnet, daß die Datenblöcke von fester Größe sind, und daß zusätzliche Informationen (91) anstelle der ersten Information (63) zu denjenigen gleichzeitig geschachtelten Datenblöcken (BLOC 2 bis BLOC 4) hinzugefügt werden, zu denen diese erste Information nicht hinzugefügt worden ist.

17. Verfahren nach einem beliebigen der Ansprüche 1 bis 16, wobei das System in Abwärtsrichtung Daten in Form von Datenblöcken (71) überträgt, dadurch gekennzeichnet, daß das System in Abhängigkeit von der besagten vorbestimmten Auswahlstrategie zu jedem der besagten Datenblöcke hinzufügt:
- eine zweite Information (73), die angibt, welcher aktiven Mobilstation der Liste die nächste Zugriffsperiode in Aufwärtsrichtung zugewiesen wird;
- eine dritte Information (74), die angibt, für welche aktive Mobilstation der Datenblock bestimmt ist.

18. Verfahren nach Anspruch 17, dadurch gekennzeichnet, daß die besagten zweiten und dritten Informationen auf dem Niveau eines Basisstationssubsystems hinzugefügt werden, zu dem die Basisstation gehört.

19. Verfahren nach einem beliebigen der Ansprüche 17 und 18, dadurch gekennzeichnet, daß wenigstens zwei Datenblöcke (BLOC 1 bis BLOC 4) in Abwärtsrichtung, die für eine gleiche Mobilstation bestimmt sind, auf wenigstens zwei Zeitintervalle, die dieser gleichen Mobilstation zugeordnet sind, im Verhältnis von einem Zeitintervall pro Rahmen in Abwärtsrichtung gleichzeitig geschachtelt werden, und daß jedes gemeinsam benutzte Zeitintervall in wenigstens zwei Teile geteilt wird, die jeder einen Abschnitt eines der gleichzeitig geschachtelten Blöcke aufnehmen.

20. Verfahren nach Anspruch 19, dadurch gekennzeichnet, daß wenigstens eine der besagten zweiten und dritten Informationen zu einem einzigen (BLOC 1) der besagten gleichzeitig geschachtelten Datenblöcke hinzugefügt wird.

21. Verfahren nach Anspruch 20, dadurch gekennzeichnet, daß die Datenblöcke von fester Größe sind und daß zusätzliche Informationen (101) anstelle von wenigstens einer der zweiten und dritten Informationen (73, 74) in denjenigen gleichzeitig geschachtelten Datenblöcken (BLOC 2 bis BLOC 4) hinzugefügt werden, zu denen wenigstens eine der zweiten und dritten Informationen nicht hinzugefügt worden ist.

## Claims

1. A method of performing cellular digital radiocommunications in a time division multiple access system implemented within a network of geographical cells (11₁ to 11ₙ) through which mobile stations (14_{1,} 14₂; SM1 to SM22) travel, a base station (12₁, 12₅) being associated with each of the cells, a mobile station communicating via the base station that is associated with the cell in which the mobile station is located:
the system conveying signals organized in frames (21), each of which is constituted by N time slots (IT1 to IT8), between the base station associated with a cell and the mobile stations located in that cell, it being possible to associate each time slot with a distinct call between the base station and one of the mobile stations;
each of the frames in the up transmission direction, from the mobile stations to the base station, containing at least one shared time slot (IT6) which is allocated to at least two distinct mobile stations (SM7 to SM22);
said method being characterized in that. for each shared time slot (IT6), the system has a list (31) of the active mobile stations, an active mobile station being a mobile station to which the shared time slot is allocated, and satisfying at least one predetermined selection criterion;
and in that, for each frame in the up transmission direction, the system associates each shared time slot with a mobile station chosen from the list (31) of the active mobile stations associated with the shared time slot, the choice being made by using a predetermined strategy.

2. A method according to claim 1, characterized in that said list (31) of active mobile stations is managed as a function of at least one of the following predetermined selection criteria:
a mobile station is inserted (53) into the list of the active mobile stations when it wishes to transmit data;
a mobile station is removed (510) from the list of the active mobile stations when, after being allocated a determined number (Nₛ) of access periods, it has transmitted no data; and
a mobile station that has been removed from the list of the active mobile stations may be put back onto the list of the active mobile stations if it wishes to transmit data once again.

3. A method according to claim 1 or 2, characterized in that said predetermined strategy used by the system to choose an active mobile station consists in allocating an access period successively to each of the active mobile stations on said list.

4. A method according to claim 3, characterized in that the lapse of time (T1) between two access periods for any one active mobile station is fixed, the maximum duration (TM) of each of the access periods being a function of the number of active mobile stations on said list.

5. A method according to claim 3, characterized in that the maximum duration of each of the access periods is fixed, the lapse of time between two access periods for any one active mobile station being a function of the number of active mobile stations on said list.

6. A method according to any one of claims 1 to 5, characterized in that the list of the active mobile stations is managed in the base station.

7. A method according to any one of claims 1 to 6, characterized in that a mobile station becomes active (53) when it receives a favorable reply from the system in response to a request for allocation of a shared time slot, which request is sent (51) by the mobile station to the system over a time slot that is dedicated to an access channel.

8. A method according to claim 7, characterized in that a mobile station becomes active again by sending (51) a request for authorization to transmit data, the request being sent to the system over said time slot that is dedicated to an access channel.

9. A method according to claim 7, characterized in that the system monitors the congestion of said access channel (RACH), and in that, as a function of said congestion of the access channel, the system modifies the predetermined number of access periods after which a mobile station is removed from the list of the active mobile stations if it has transmitted no data.

10. A method according to any one of claims 1 to 9, characterized in that, when a mobile station becomes active for the first time, the system takes account of the number of active mobile stations already associated with the various shared time slots, when choosing the shared time slot with which the new active mobile station is to be associated.

11. A method according to any one of claims 1 to 10, characterized in that an active mobile station on a first list associated with a first shared time slot may be dynamically transferred to a second list associated with a second shared time slot.

12. A method according to claim 11, characterized in that an active mobile station is dynamically transferred from a first list to a second list if at least one of the following conditions is satisfied:
the number of active mobile stations on the first list is greater than a predetermined threshold number; and
the active mobile station has a quantity of data to be transmitted that is greater than a predetermined threshold quantity.

13. A method according to any one of claims 1 to 12, with an active mobile station transmitting data in the form of data blocks (62), said method being characterized in that an active mobile station that is in the process of transmitting adds a first item of information (63) to each of said data blocks so as to indicate whether or not it still has data to be transmitted.

14. A method according to claim 13, characterized in that at least two data blocks (BLOCK 1 to BLOCK 4) from the same active mobile station are interleaved simultaneously over at least two shared time slots (IT6) associated with said same active mobile station, at a rate of one shared time slot per frame in the up direction;
and in that each shared time slot is divided into at least two portions, each of which receives a portion of one of the simultaneously interleaved blocks.

15. A method according to claim 14, characterized in that said first item of information (63) is added to a single one (BLOCK 1) of said simultaneously interleaved data blocks.

16. A method according to claim 15, characterized in that the data blocks are of fixed length, and in that additional items of information (91) are added instead of the first item of information (63) in those simultaneously interleaved data blocks (BLOCK 2 to BLOCK 4) to which the first item of information has not been added.

17. A method according to any one of claims 1 to 16, the system transmitting data in the form of data blocks (71) in the down direction, said method being characterized in that, as a function said predetermined strategy for making a choice, the system adds the following to each of said data blocks:
a second item of information (73) indicating that active mobile station on the list to which the next access period in the up transmission direction is allocated; and
a third item of information (74) indicating that active mobile station to which the data block is addressed.

18. A method according to claim 17, characterized in that said second and third items of information are added at a base station sub-system to which the base station belongs.

19. A method according to claim 17 or 18, characterized in that at least two data blocks (BLOCK 1 to BLOCK 4) in the down direction that are addressed to the same mobile station are interleaved simultaneously over at least two time slots associated with said same mobile station, at a rate of one time slot per frame in the down direction;
and in that each shared time slot is divided into at least two portions, each of which receives a portion of one of the simultaneously interleaved blocks.

20. A method according to claim 19, characterized in that at least one of said second and third items of information is added to a single one (BLOCK 1) of said simultaneously interleaved data blocks.

21. A method according to claim 20, characterized in that the data blocks are of fixed length, and in that additional items of information (101) are added instead of at least one of the second and third items of information (73, 74) in those simultaneously interleaved data blocks (BLOCK 2 to BLOCK 4) to which at least one of the second and third items of information has not been added.
